(19) **Europäisches Patentamt**
**European Patent Office**
**Office européen des brevets**

(11) **EP 1 496 280 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(51) Int Cl.:
*F16D 48/06* *(2006.01)*

(21) Anmeldenummer: **04014817.3**

(22) Anmeldetag: **24.06.2004**

(54) **Verfahren zur Unterdrückung von Rupfschwingungen in einer Reibungskupplung**

Method for reducing judder vibrations in a friction clutch

Procédure de réduction des vibrations de grippage dans un embrayage à friction

(84) Benannte Vertragsstaaten:
**AT BE BG CH CY CZ DE DK EE ES FI FR GB GR HU IE IT LI LU MC NL PL PT RO SE SI SK TR**

(30) Priorität: **09.07.2003 DE 10330896**

(43) Veröffentlichungstag der Anmeldung:
**12.01.2005 Patentblatt 2005/02**

(73) Patentinhaber: **LuK Lamellen und Kupplungsbau Beteiligungs KG**
**77815 Bühl (DE)**

(72) Erfinder:
• **Serebrennikov, Boris**
**76532 Baden-Baden (DE)**
• **Hausner, Markus**
**76135 Karlsruhe (DE)**

(56) Entgegenhaltungen:
**DE-A1- 10 041 387** **FR-A1- 2 828 916**
**US-A1- 2002 063 031**

**Beschreibung**

Die vorliegende Erfindung betrifft ein Verfahren zur Unterdrückung von Rupfschwingungen in einem Ausrücksystem für eine Reibungskupplung in einem Antriebsstrang eines Kraftfahrzeuges mit einem Hauptausrücksystem und einem Nebenausrücksystem, das durch einen elektromotorisch angetriebenen Aktor betätigbar ist.

Während des Anfahrvorganges eines Kraftfahrzeuges mit einer Reibungskupplung und einem Gangwechselgetriebe werden von der schlupfenden Kupplung Wechselmomente in den Antriebsstrang eingeleitet. Manche Fahrzeuge reagieren darauf empfindlich, was sich in spürbaren Vibrationen für den Fahrer, so genannten Rupfschwingungen, äußert. Die Rupfschwingungen können den Fahrkomfort deutlich einschränken und werden als unangenehm empfunden. Die Rupfschwingungen können prinzipiell durch eine Reduzierung der Anregung verringert werden, beispielsweise durch glattere Oberflächen der Kupplungsbeläge oder Kupplungsscheiben etc., hier stößt man jedoch an fertigungstechnische Grenzen, so dass immer eine Restanregung verbleibt.

In der Druckschrift US 2002/063031 A1 wird eine zeitlich gestaffelte Ansteuerung zweier parallel geschalteter Aktoren zur Kupplungsbetätigung offenbart.

In der Druckschrift FR 2 828 916 A1 wird eine automatisch betätigbare Reibungskupplung offenbart, deren Aus- und Einrückvorgänge mittels eines Steuergerätes in Abhängigkeit einer aus der Drehzahl einer Getriebeausgangskomponente und aus der Drehzahl der Getriebeeingangswelle gebildeten Größe als Regelparameter zur Dämpfung der, bei der Momentenübertragung auftretenden Schwingungen dient.

Aufgabe der vorliegenden Erfindung ist es, die Rupfschwingungen während eines Anfahrvorganges weiter zu minimieren.

Dieses Problem wird gelöst durch ein Verfahren zur Unterdrückung von Rupfschwingungen in einem Ausrücksystem für eine Reibungskupplung in einem Antriebsstrang eines Kraftfahrzeuges mit einem Hauptausrücksystem und einem Nebenausrücksystem, das durch einen elektromotorisch angetriebenen Aktor betätigbar ist, wobei die Antriebsspannung des elektromotorisch angetriebenen Aktors proportional zur Rupfdrehzahl ist und wobei sich die Rupfdrehzahl aus einer Getriebeeingangsdrehzahl minus der gefilterten Getriebeeingangsdrehzahl ergibt.

Das Ausrücksystem umfasst vorzugsweise ein hydraulisches System mit einem Geberzylinder, einem Nehmerzylinder und einer diese verbindenden Druckmediumsleitung. In der Druckmediumsleitung ist beispielsweise ein Zwischenkolben angeordnet, der die Druckmediumsleitung in einen ersten Leitungsstrang und einen zweiten Leitungsstrang teilt. Der Zwischenkolben ist mit einem Aktor verbunden, so dass der Druck in dem ersten Leitungsstrang durch Aufbringen einer Kraft durch den Aktor auf den Zwischenkolben erhöht oder erniedrigt werden kann. Eine Erhöhung bzw. eine Erniedrigung des Druckes in dem ersten Leitungsstrang durch Aufbringen der Kraft durch den Aktor auf den Zwischenkolben kann dabei dynamisch und mit --verglichen zu dem eigentlichen Einkuppelvorgang-- schnellen Änderungen geschehen. Durch das Aufbringen der Kraft wird die Kupplung über den Nehmerzylinder weiter geöffnet oder geschlossen, als es der Stellung beispielsweise des Kupplungspedals des Fahrers entspricht. Dem relativ langsamen Einkupplungsvorgang, der in erster Näherung als statisch betrachtet werden kann, wird dynamisch ein stärkeres Öffnen oder Schließen der Kupplung überlagert, gewissermaßen aufmoduliert. Durch geeignete Regelung der aufmodulierten dynamischen Kupplungsbetätigung kann ein Ausgleich der Rupfschwingungen erzielt werden. Dazu sind geeignete Messgrößen, die auf eine Rupfschwingung hindeuten, für eine Regelung des dynamisch überlagerten Einkuppelvorganges heranzuziehen. Statt eines Zwischenkolbens mit einem Aktor kann auch jede Form einer Pumpe oder dergleichen angewandt werden.

In einer weiteren vorteilhaften Ausgestaltung des hydraulischen Systems ist vorgesehen, dass der Geberzylinder und der Nehmerzylinder Teile eines Hauptausrücksystems und dass der Zwischenkolben und der Nehmerzylinder Teile eines Nebenausrücksystems sind. Das hydraulische System verfügt also über zwei voneinander im Wesentlichen unabhängige Ausrücksysteme, wobei der Nehmerzylinder beiden Ausrücksystemen angehört. Das Hauptausrücksystem ist das an sich bekannte System aus Geberzylinder und Nehmerzylinder, wobei der Geberzylinder beispielsweise durch ein Kupplungspedal betätigt wird. Das Nebenausrücksystem verfügt mit dem Zwischenkolben und dem damit verbundenen Aktor über ein eigenes Betätigungsmittel vergleichbar dem Geberzylinder. Das Nebenausrücksystem muss nicht in der Lage sein, einen vollständigen Ein- bzw. Auskuppelvorgang über den Nehmeryzlinder zu realisieren. Hier reicht es aus, wenn ein kleiner Teilweg dem durch das Hauptausrücksystem vorgegebenen Gesamtweg überlagerbar ist. Das Nebenausrücksystem kann alternativ auch auf einen eigenständigen Nehmerzylinder wirken. Dazu können beispielsweise auch zwei vollständig unabhängige hydraulische Systeme vorgesehen sein. Alternativ kann das Nebenausrücksystem auch z.B. in Form einer in der Druckmediumsleitung angeordneten Hydraulikpumpe ausgeführt sein. Durch entsprechende Ansteuerung der Hydraulikpumpe kann eine DruckErhöhung oder -absenkung in dem ersten Leitungsstrang bewirkt werden.

Das Ausrücksystem zur Betätigung einer Reibungskupplung in einem Antriebsstrang eines Kraftfahrzeuges kann des Weiteren ein Hauptausrücksystem und zusätzlich ein eigenständiges Nebenausrücksystem umfassen. Sowohl Hauptausrücksystem als auch Nebenausrücksystem können völlig unabhängig voneinander ausgeführt sein und beispielsweise ein mechanisches, hydraulisches oder elektrisches Zentralausrücksystem oder jede andere bekannte Form eines Ausrücksystems sein. Vorteilhaft ist, wenn das Nebenausrücksystem parallel zu dem Hauptausrücksystem angeordnet ist. In diesem Fall können das Nebenausrücksystem und das Hauptausrücksystem unabhängig voneinander betätigt werden. Bei einer gleichzeitigen Betätigung überlagern sich die von beiden Ausrücksystemen hervorgerufenen Kupplungsbetätigungswege. Die mit dem Nebenausrücksystem erzielbaren Ausrückwege können dabei deutlich kleiner sein als die von dem Hauptausrücksystem erzielbaren Ausrückwege, so dass der eigentliche Ausrückvorgang vollständig nur von dem Hauptausrücksystem ausgeführt werden kann, das Nebenausrücksystem kann lediglich eine Erhöhung oder Verringerung der Ausrückbewegung bewirken. Vorteilhaft ist dabei, wenn das Ausrücklager sowohl durch das Nebenausrücksystem als auch durch das Hauptausrücksystem jeweils unabhängig voneinander betätigbar ist.

In einer alternativen Ausgestaltung des Ausrücksystems kann vorgesehen sein, dass das Nebenausrücksystem in Serie zu dem Hauptausrücksystem angeordnet ist. Dies ist insbesondere bei einem Zentralausrücksystem vergleichsweise leicht realisierbar, indem z.B. zwei voneinander unabhängige hydraulische oder mechanische Zentralausrücker hintereinander angeordnet sind. Die Ausrückwege sowie die notwendigen Ausrückkräfte können dabei deutlich unterschiedlich sein, so dass das Nebenausrücksystem wie in den zuvor dargestellten Ausführungsformen nur für einen Teil des für ein vollständiges Trennen der Kupplung notwendigen Weges ausgelegt sein kann und entsprechend niedrigere Kräfte bei gleichen Ausrückkräften notwendig sind.

In einer weiteren vorteilhaften Ausgestaltung kann vorgesehen sein, dass Teile des Ausrücksystems gemeinsam sowohl dem Nebenausrücksystem als auch dem Hauptausrücksystem zugeordnet sind. Dies bedeutet, dass die in der mechanischen oder hydraulischen Wirkungskette nah an der Kupplung angeordneten Elemente des Ausrücksystems, z.B. das Ausrücklager, ein Nehmerzylinder oder Teile von Hydraulikleitungen, jeweils gemeinsam beiden Ausrücksystemen zugeordnet sind und eine Trennung zwischen Hauptausrücksystem und Nebenausrücksystem erst innerhalb der Wirkungskette in Richtung der Stellmittel wie beispielsweise eben Geberzylinder, Kupplungspedal oder dergleichen vorgenommen wird. Grundsätzlich kann diese Trennung an jeder Stelle der Wirkungskette zwischen Kupplung und beispielsweise einem Fußpedal zur Betätigung des Geberzylinders vorgenommen werden, beispielsweise können vollständig unabhängige Ausrücksysteme jeweils auf das gleiche Ausrücklager einwirken oder in einem anderen Extrembeispiel kann direkt eine mechanische Kraft parallel zur von dem Kraftfahrer aufgebrachten Fußpedalkraft auf das Kupplungspedal aufgebracht werden. Dazwischen sind jegliche Variationen möglich.

In einer weiteren Ausgestaltung des erfindungsgemäßen Verfahrens ist vorgesehen, dass der Proportionalitätsfaktor rampenförmig erhöht wird. Wird eine Rupfschwingung erkannt, so bleibt der Proportionalitätsfaktor für eine gewisse Zeit konstant und wird danach erhöht. Der erhöhte Proportionalitätsfaktor bleibt wieder für einen bestimmten Zeitraum konstant, wird dann erhöht und so fort.

In einer weiteren Ausgestaltung des erfindungsgemäßen Verfahrens ist vorgesehen, dass der Proportionalitätsfaktor nach der Reduzierung der Rupfschwingung verringert wird. Dies kann entsprechend der Erhöhung des Proportionalitätsfaktors ebenfalls rampenförmig geschehen.

Das eingangs genannte Problem wird auch gelöst durch ein Ausrücksystem zur Betätigung einer Reibungskupplung in einem Antriebsstrang eines Kraftfahrzeuges mit einem Hauptausrücksystem und einem Nebenausrücksystem, das durch einen elektromotorisch angetriebenen Aktor betätigbar ist, wobei die Antriebsspannung des elektromotorisch angetriebenen Aktors proportional zu einer Rupfdrehzahl ist.

Im Folgenden werden Ausführungsbeispiele der Erfindung anhand der beiliegenden Zeichnungen erläutert. Dabei zeigen:

Fig. 1 eine schematische Darstellung eines hydraulischen Systems anhand eines Ausführungsbeispiels einer Kupplungsausrückvorrichtung;

Fig. 2 eine Prinzipdarstellung einer ersten Ausführungsform eines erfindungsgemäßen Ausrücksystems;

Fig. 3 eine Prinzipdarstellung einer zweiten Ausführungsform eines erfindungsgemäßen Ausrücksystems;

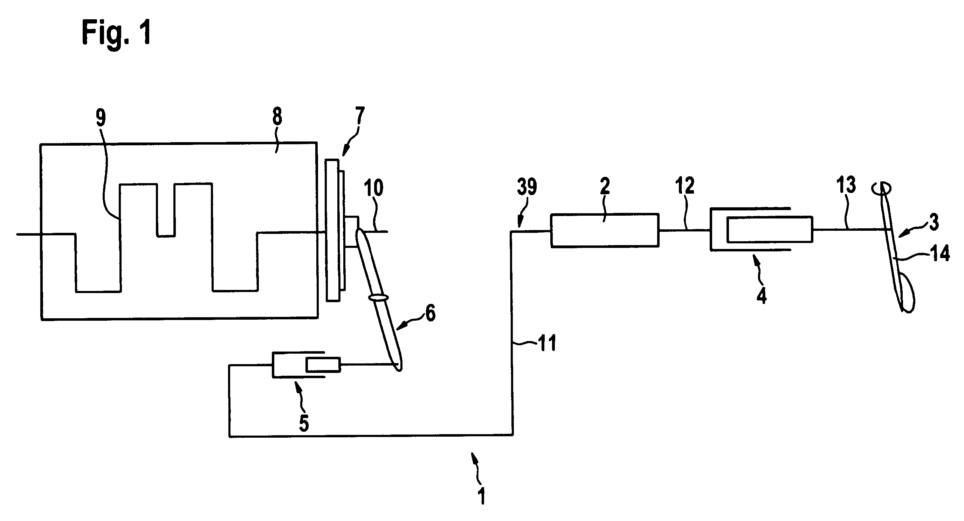

Fig. 1 zeigt in schematischer Darstellung eine mögliche Ausgestaltung eines hydraulischen Systems anhand einer Kupplungsausrückvorrichtung 3 mit einem Geberzylinder 4 und einem Nehmerzylinder 5. Ein Druckbegrenzungsventil 2 ist in dem gezeigten Ausführungsbeispiel in einer Druckmediumsleitung 39 zwischen einen ersten Leitungsstrang 11 und einem zweiten Leitungsstrang 12 eingebaut und trennt beide in nicht geöffnetem Zustand voneinander. Es versteht sich, dass in anderen Ausführungsbeispielen das Druckbegrenzungsventil 2 in den Geberzylinder 4 oder in den Nehmerzylinder 5 integriert sein kann sowie in anderen hydraulischen Systemen beispielsweise Bremsanlagen, Lenkhelfsysteme, und dergleichen in ein Funktionsbauteil integriert sein kann. Weiterhin kann ein erfindungsgemäßes Druckbegrenzungsventil 2 in jedem hydraulischen Leitungssystem in vorteilhafter Weise als Druckbegrenzungsventil und/oder als Schwingungsfilter beispielsweise als so genanntes "Kribbelfilter" von Vorteil sein.

Das Kupplungsausrücksystem 3 betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann. Hierdurch wird mittels einer mechanischen Übertragung 13 Druck im Geberzylinder 4 aufgebaut, der über den zweiten Leitungsstrang 12, über das Druckbegrenzungsventil 2 und den ersten Leistungsstrang 11 einen Druck im Nehmerzylinder 5 aufbaut. Der Nehmerzylinder 5 kann - wie in dem gezeigten Beispiel - konzentrisch um die Getriebeeingangswelle 10 angeordnet sein und sich axial an einem - nicht dargestellten Getriebegehäuse abstützen und die nötige Ausrückkraft über ein Ausrücklager an der Kupplung 7, beziehungsweise an deren Ausrückelementen wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

Durch die Vebrennungsprozesse in der Brennkraftmaschine 25 erfährt die Kurbelwelle 9 in Abhängigkeit von der Ausgestaltung der Brennkraftmaschine 8, beispielsweise in Abhängigkeit von der Zylinderzahl, ungleichförmige Belastungen, die sich in Axial- und/oder Taumelschwingungen dieser äußern und die über die Ausrückmechanik 6 auf den Nehmerzylinder 5, das Leitungssträngе 11, 12 auf den Geberzylinder 4 und von dort über die mechanische Verbindung 13 auf das Betätigungsglied 14 übertragen werden. Im Falle eines Kupplungspedals als Betätigungsglied werden diese Schwingungen als unangenehm empfunden. Im Falle eines Aktors als Betätigungsglied 14 kann beispielsweise eine verminderte Regelgenauigkeit oder eine verkürzte Lebensdauer die Folge der Schwingungen sein. Das Druckbegrenzungsventil 2 ist daher zur Dämpfung in die Leitungen 11, 12 eingeschaltet und zur Dämpfung der von der Kurbelwelle 9 eingetragenen Vibrationen abgestimmt. Der Frequenzbereich derartiger Schwingungen liegt typischer Weise bei 50 bis 200 Hz.

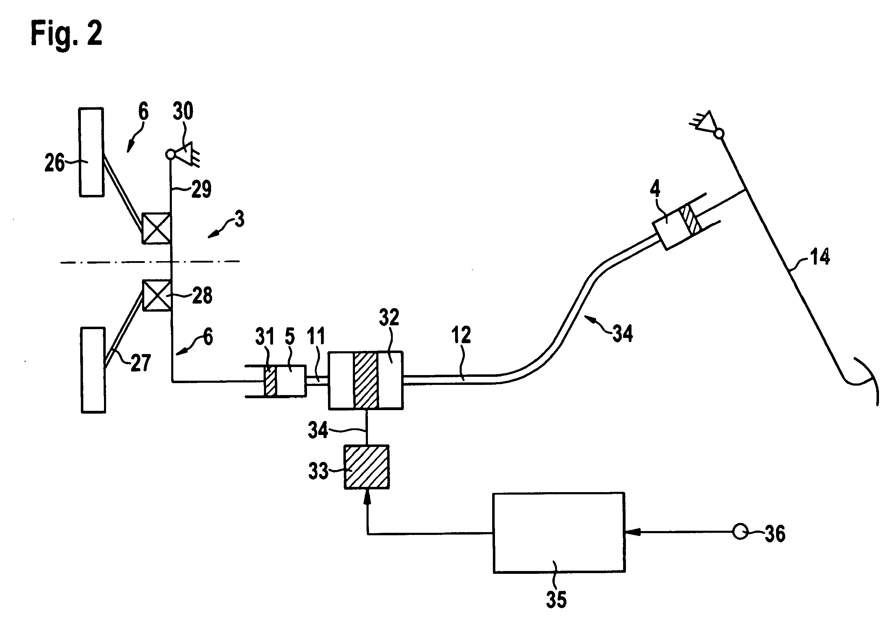

Fig. 2 zeigt eine Prinzipdarstellung eines erfindungsgemäßen. Ausrücksystems. Dargestellt ist eine Prinzipskizze einer Kupplungsausrückvorrichtung 3 mit einer oder mehreren zur ansonsten nicht näher dargestellten Kupplung 7 gehörigen Kupplungsscheiben 26, die mit einer an sich bekannten mechanischen Verbindung 27 mit einem an sich bekannten Ausrücklager 28 gekoppelt ist. Das Ausrücklager 28 ist wiederum gekoppelt mit einer Ausrückmechanik 6. In der Prinzipskizze der Fig. 2 ist dies angedeutet durch einen Ausrückhebel 29, welcher auf einer Seite gehäusefest drehbar an einer Lagerung 30 gelagert ist und an der anderen Seite mit einem Kolben 31 eines Nehmerzylinders 5 verbunden ist. Der Ausrückhebel 29 soll in der Skizze der Fig. 2 zunächst nur verdeutlichen, dass das Ausrücklager 28 durch den Nehmerzylinder 5 als Betätigungselement durch eine entsprechende mechanische Kopplung im Wesentlichen axial bewegt wird. In der Praxis kann dies z.B. erreicht werden durch einen hydraulischen Zentralausrücker, bei dem der Kolben 31 als Ringkolben in bekannter Weise ausgebildet ist und auf das Ausrücklager 28 wirkt, oder beispielsweise durch einen so genannten mechanischen Zentralausrücker, bei dem eine Hülse durch eine entsprechende Kulissenführung ähnlich einem Gewinde bei Verdrehung axial verschoben wird, wobei der Nehmerzylinder 5 über einen radialen Hebel mit der Hülse verbunden ist und durch Verdrehung des Hebels eine axiale Ausrückbewegung der Hülse und damit des Ausrücklagers 28 hervorruft. Ebenso sind alle anderen aus dem Stand der Technik bekannten mechanischen Kopplungen zwischen einem Betätigungselement und dem Ausrücklager 28 denkbar. Der Nehmerzylinder 5 ist entsprechend der Darstellung der Fig. 1 über einen Leitungsstrang 11, 12 mit einem Geberzylinder 4 hydraulisch verbunden. Der Geberzylinder wiederum wird von einem Betätigungsglied 14 betätigt, dies kann ein manuell zu bedienendes Kupplungspedal, ein elektrischer oder pneumatischer Aktor oder dergleichen sein.

In dem Ausführungsbeispiel gemäß Fig. 2 ist zwischen dem ersten Leitungsstrang 11 und dem zweiten Leitungsstrang 12 ein Zwischenkolben 32 angeordnet. Der Zwischenkolben 32 trennt den ersten Leitungsstrang 11 von dem zweiten Leitungsstrang 12. Der Zwischenkolben 32 verfügt auf beiden Seiten über jeweils einen Druckraum sowie einen mit diesem korrespondierenden hydraulischen Anschluss. Prinzipiell entspricht der Zwischenkolben 32 also der direkten mechanischen Kopplung eines Geberzylinders und eines Nehmerzylinders, die in die Hydraulikleitung eingefügt sind und so ein mechanisches Zwischenglied für die Übertragung hydraulischer Kräfte darstellen. Der Zwischenkolben 32 kann beispielsweise über unterschiedliche hydraulische Querschnitte auf beiden Leitungssträngen verfügen, so dass sich dadurch eine Übersetzung von Kraft und Volumenförderung zwischen erstem und zweitem Leitungsstrang 11, 12 ergibt. In dem hier dargestellten Ausführungsbeispiel greift zusätzlich ein weiterer Aktor 33 an dem Zwischenkolben 32 an. Der Aktor 33 kann beispielsweise elektrisch oder ebenfalls hydraulisch angetrieben sein. Im vorliegenden Ausführungsbeispiel wird von einem elektrischen Aktor ausgegangen. Der elektrische Aktor 33 ist über eine mechanische Verbindung 34 mit dem Zwischenkolben 32 verbunden. Der elektrisch betriebene Aktor 33 wird von einem Steuergerät 35 angesteuert, der über eine hier nicht dargestellte Stromversorgung mit dem Bordnetz des Kraftfahrzeuges verbunden ist und der über einen oder mehrere Sensoren 36 für Regelgrößen bzw. Messgrößen verfügt.

Eine Kupplungsbetätigung ist nun zum einen durch Kraftbeaufschlagung des Geberzylinders 4 möglich, zum anderen kann der Zwischenkolben 32 mit Kraft beaufschlagt werden. Der Zwischenkolben 32 kann sowohl in Wirkungsrichtung des Geberzylinders 4 betrieben werden, d.h. dass der vom Geberzylinder 4 erzeugte Hydraulikdruck erhöht wird und so die Kupplung weiter geöffnet wird, oder er kann gegen den Geberzylinder 4 betrieben werden, d.h. dass der Hydraulikdruck in dem ersten Leitungsstrang 11 verringert oder gar aufgehoben wird.

Die Kombination des Geberzylinders 4 mit dem Nehmerzylinder 5 bildet hier ein erstes hydraulisches System und damit ein erstes Ausrücksystem, das im Folgenden als Hauptausrücksystem bezeichnet wird. Eine Betätigung des Geberzylinders 4 wird, abgesehen von einer möglichen Übersetzung durch den Zwischenkolben 32, auf den Nehmerzylinder 5 übertragen und bewirkt hier unmittelbar eine Betätigung der Kupplungsausrückvorrichtung 3. Der Aktor 33 bildet über die mechanische Verbindung 34 zusammen mit dem Zwischenkolben 32 und dem Nehmerzylinder 5 ein zweites hydraulisches System, das im Folgenden als Nebenausrücksystem bezeichnet wird. Eine Kupplungsbetätigung ist durch Ansteuerung des Aktors 33 und damit des Zwischenkolbens 32 über den Nehmerzylinder 5 unabhängig von einer Betätigung des Geberzylinders 4 möglich.

Treten während einer Schlupfphase der Kupplung 7 Rupfschwingungen auf, werden diese von einem geeigneten Sensor 36 erfasst und von dem Steuergerät 35 eingelesen und verarbeitet. Ein geeignetes Signal für den Sensor 36 ist z.B. die Raddrehzahl, die Getriebedrehzahl, die Fahrzeuglängsbeschleunigung, durch Rupfschwingungen hervorgerufene Vibrationen oder dergleichen. Wird ein von dem Sensor 36 geliefertes Signal von dem Steuergerät 35 als ein Signal erkannt, das auf Rupfschwingungen hindeutet, wird der Aktor 33 angesteuert und betätigt. Das Steuergerät 35 enthält für die Erkennung von Rupfschwingungen einen Regler, der nach einem entsprechenden Regelalgorithmus arbeitet, es kann sich hier beispielsweise auch um ein Expertensystem oder dergleichen handeln. Der Aktor 33 wird nun dynamisch in Phase, Frequenz und Amplitude angesteuert, wobei die Kupplung 7 entsprechend etwas stärker als durch den Geberzylinder 4 vorgegeben geöffnet oder geschlossen wird, so dass eine der Rupfschwingung entgegenwirkende Momentenschwankung im Antriebsstrang erzeugt wird. Die Rupfschwingungen werden also durch eine geeignete dynamische Veränderung des Antriebsmomentes in dem Antriebsstrang ausgeglichen bzw. getilgt. Dieser Momentenverlauf bzw. Momentenschwankung wird über die Fahrzeugkupplung durch entsprechend stärkeres Öffnen und Schließen und damit eine Vergrößerung bzw. Verringerung des Schlupfes erzeugt.

Der Aktor 33 bzw. das gesamte Nebenausrücksystem muss nicht in der Lage sein, die Kupplung selbständig vollständig zu öffnen. Vielmehr reicht es für den vorgesehenen Anwendungsfall aus, wenn dieser nur einen Teilweg der Kupplung ausrücken kann, da die Ausrückbewegung des Nebenausrücksystems der Ausrückbewegung des Hauptausrücksystems gewissermaßen aufmoduliert wird. Während eines mehr oder minder gleichmäßigen Einkuppelvorgangs beispielsweise wird die Kupplung um die jeweils aktuelle Kupplungsstellung nur ein wenig mehr geschlossen oder geöffnet.

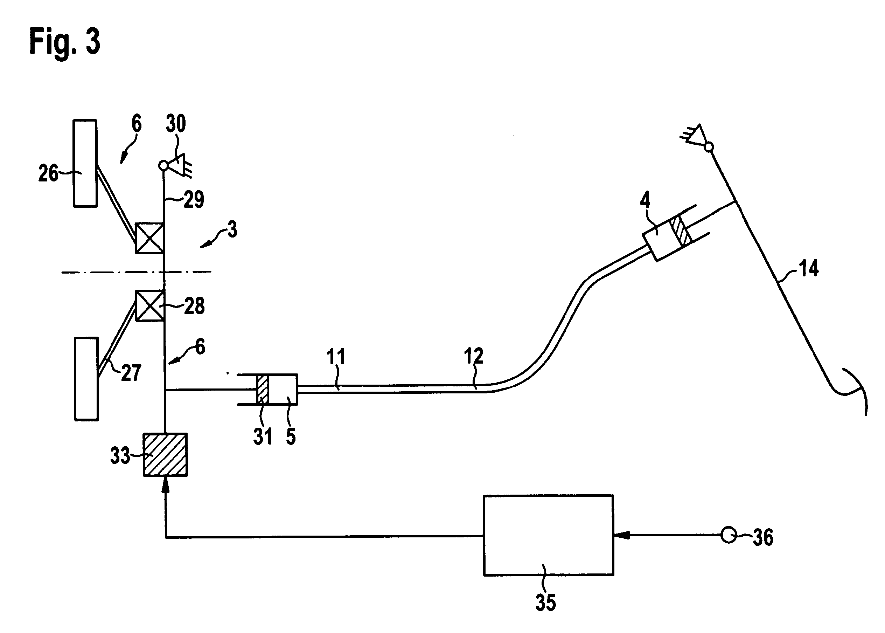

Fig. 3 zeigt eine alternative Ausführungsform des erfindungsgemäßen Ausrücksystems. Das Nebenausrücksystem ist hier nicht teilweise in die Hydraulikleitung des Hauptausrücksystems integriert, sondern direkt mechanisch mit dem Ausrückhebel 29 verbunden. Der Leitungsstrang 11, 12 in Fig. 3 ist der Einfachheit halber ohne beispielsweise ein Druckbegrenzungsventil 2 oder dergleichen dargestellt. Auch hier bildet der Geberzylinder 4 über den Nehmerzylinder 5 und den Ausrückhebel 29 sowie das Ausrücklager 28 und die mechanische Verbindung 27 mit der Kupplungsscheibe 26 das Hauptausrücksystem. Auf den Ausrückhebel 29 wirkt unmittelbar der mechanische Aktor 33. Die Verbindung von Nehmerzylinder 5 und Aktor 33 mit dem Ausrückhebel 29 kann über eine hier nicht näher dargestellte geeignete Überlagerungsmechanik oder ein Kurbelgetriebe oder dergleichen erfolgen. Auf diese Weise ist das Nebenausrücksystem parallel zu dem Hauptausrücksystem angeordnet. Eine Betätigung des Nebenausrücksystems wird also der Bewegung des Hauptausrücksystems überlagert und ermöglicht so das Aufmodulieren kleiner Bewegungsschwankungen durch das Nebenausrücksystem auf das Hauptausrücksystem. Die aufzuwendenden Kräfte des Nebenausrücksystems sind dabei verglichen mit den aufzuwendenden Kräften und Wegen des Hauptausrücksystems entsprechend den zuvor erläuterten Ausführungsbeispielen vergleichsweise gering. Je nach Ausführung der Verbindung zwischen Nehmerzylinder 5 und Ausrücklager 28 kann das Hauptausrücksystem auch in Serie mit dem Nebenausrücksystem angeordnet sein. Ist beispielsweise ein Zentralausrücksystem als Hauptausrücksystem vorhanden, so kann ein zweites Zentralausrücksystem in Serie mit dem ersten Zentralausrücksystem angeordnet werden, auch hier überlagern sich die Bewegungen. Durch eine geeignete Dimensionierung des zu dem Nebenausrücksystem gehörenden Zentralausrückers kann auch hier eine entsprechende Übersetzung erreicht werden, es sind also auch in diesem Fall nur geringe Kräfte bei geringen zurückzulegenden Wegen notwendig.

Prinzipiell kann der Aktor 33 an jeder Stelle zwischen dem Zwischenkolben 32 und dem Ausrücklager 28 angeordnet sein. Das Nebenausrücksystem entsprechend dem Ausführungsbeispiel der Fig. 2 kann auch unmittelbar in den Nehmerzylinder 5 integriert sein.

Nachfolgend wir ein Verfahren zur Steuerung der anhand der Fig. 2 und 3 beschriebenen Ausrücksysteme dargestellt. Die schwingende Komponente ∆N der Getriebeeingangsdrehzahl kann als

$$\Delta N = N\,GE - N\,GE\_gefiltert$$

dargestellt werden. Hier ist N GE_gefiltert die gefilterte Getriebeeingangsdrehzahl, die die mit einer Rupffrequenz, dies ist eine Frequenz von ca. 10 Hz im ersten Gang, schwingende Komponente nicht beinhaltet. N GE ist die Getriebeeingangsdrehzahl. Um eine Zusatzdämpfung zu verrichten muss das Kupplungsmoment

$$M\ Kuppl = M\ aus\_Pedalstellung - K\ M \cdot \Delta N$$

moduliert werden. Hier ist K die Konstante, die die Stärke der Dämpfung definiert., M Kuppl ist das Kupplungsmoment, M aus_Pedalstellung ist das im wesentlichen konstante Moment, das aus dem jeweiligen Kupplungsschlupf herrührt. Die Momentmodulation erfolgt durch die Wegmodulation

$$x\ Kuppl = x\ aus\_Pedalstellung + x\ mod. = x\ aus\_Pedalstellung + K\ x \cdot \Delta N$$

wobei x Kuppl der Weg ist, um den die Kupplung geöffnet ist, x aus_Pedalstellung der Teil des Kupplungsweges ist, der durch die Stellung des Kupplungspedals bewirkt wird, x mod der aufmodulierte Weganteil ist.

Die Modulation

$$X\ mod = K\ x \cdot \Delta N$$

wird durch eine Wegvorgabe realisiert.

Bei dem erfindungsgemäßen Verfahren werden die oben genannten Parameter so ausgelegt, dass die Wegmodulation für die Rupfreduzierung

$$X\ mod = K\ x \cdot \Delta N$$

mit guter Qualität erreicht werden kann, ohne vom Fahrer spürbare Pedalschwingungen anzuregen. Der Aktor besitzt eine kleine äquivalente Masse und ist so im Ausrücksystem angeordnet, dass er eine möglichst kleine Masse im Sinne des äquivalenten Systems ohne Übersetzungen bewegen muss.

Um möglichst wenig Anregung in Richtung des Pedals zu übertragen und möglichst wenig Masse bewegen zu müssen, wird eine zusätzliche Nachgiebigkeit zwischen dem Aktor und dem in Richtung Pedal folgenden Element des Ausrücksystems eingeführt. Die Nachgiebigkeit darf wegen der Anforderungen auf dem Verlustweg nicht groß sein.

Unter den zuvor genannten Bedingungen bleiben die erste partielle Eigenfrequenz des Teilsystems, in dem die Wegmodulation erwünscht ist, somit von der Kupplung bis zum Aktor, hoch genug, um für die mit der Rupffrequenz schwingenden Kraft den Zusammenhang

$$x\ mod \sim F$$

anzunehmen. Die Wegmodulation ist der Aktorkraft also proportional. Dies führt zu einer Aktorkraft

$$F = K\ F \cdot \Delta N.$$

Bei einer elektromotorischen Ausführung kann die Bedingung einer kleinen äquivalenten Aktormasse M E leicht erfüllt werden. Diese Masse M E-Motor ist gleich

$$M\ E\text{-}Motor = J\ E\text{-}Motors \cdot i2,$$

wobei J E-Motors das Massenträgheitsmoment und i die Übersetzung der translatorischen Bewegung ist. Der Elektromotor und die Übersetzung der translatorischen Bewegung können so gewählt werden, dass die Aktorkraft groß genug ist und die Masse klein bleibt. Wenn dies erfüllt wird, gilt

$$x \bmod \sim M \sim I,$$

wobei M das Moment des Elektromotors und I die Stromstärke ist. Für die kleinen Wegmodulationen der Kupplung mit der Rupffrequenz ist die Drehzahl des Elektromotors und damit die Gegeninduktion vernachlässigbar. Deswegen ist die Wegmodulation proportional zur Spannung U

$$x \bmod \sim M \sim I \sim U.$$

Für den elektromotorischen Aktor wird die Spannung U des Elektromotors daher der Rupfdrehzahl proportional vorgegeben

$$U = K_U \cdot \Delta N.$$

Der Faktor $K_U$ kann nach der Rupferkennung, wenn $\Delta N$ groß genug ist um gegenzusteuern, rampenförmig erhöht werden. Nach der Reduzierung des Rupfens ist es sinnvoll, den Faktor $K_u$ zu verringern, um das Ausrücksystem möglichst wenig anzuregen.

## Patentansprüche

1. Verfahren zur Unterdrückung von Rupfschwingungen in einem Ausrücksystem für eine Reibungskupplung in einem Antriebsstrang eines Kraftfahrzeuges mit einem Hauptausrücksystem und einem Nebenausrücksystem, das durch einen elektromotorisch angetriebenen Aktor (33) betätigbar ist, **dadurch gekennzeichnet, dass** die Antriebsspannung des elektromotorisch angetriebenen Aktors (33) proportional zu einer Rupfdrehzahl ist und wobei sich die Rupfdrehzahl aus einer Getriebeeingangsdrehzahl (NGE) minus der gefilterten Getriebeeingangsdrehzahl (NGE_gefiltert) ergibt.

2. Verfahren nach dem vorhergehenden Anspruch, **dadurch gekennzeichnet, dass** der Proportionalitätsfaktor rampenförmig erhöht wird.

3. Verfahren nach einem der vorhergehenden Ansprüche, **dadurch gekennzeichnet, dass** der Proportionalitätsfaktor nach der Reduzierung der Rupfschwingung verringert wird.

4. Ausrücksystem zur Betätigung einer Reibungskupplung in einem Antriebsstrang eines Kraftfahrzeuges mit einem Hauptausrücksystem und einem Nebenausrücksystem, das durch einen elektromotorisch angetriebenen Aktor (33) betätigbar ist, **dadurch gekennzeichnet, dass** die Antriebsspannung des elektromotorisch angetriebenen Aktors (33) proportional zu einer Rupfdrehzahl ist und wobei sich die Rupfdrehzahl aus einer Getriebeeingangsdrehzahl (NGE) minus der gefilterten Getriebeeingangsdrehzahl (NGE_gefiltert) ergibt.

## Claims

1. A method for suppressing grab vibrations in a clutch disengaging system for a friction clutch in a power train of a motor vehicle having a main disengaging system and a subsidiary disengaging system that is operable by an actuator (33) driven by an electric motor, **characterized in that** the drive voltage of the electric-motor-driven actuator (33) is proportional to a grab speed and where the grab speed results from a transmission input speed (TIS) minus the filtered transmission input speed (filtered TIS).

**2.** The method according to the preceding claim, **characterized in that** the proportionality factor is increased by a ramp pattern.

**3.** The method according to one of the preceding claims, **characterized in that** the proportionality factor is lessened after the reduction of the grab vibration.

**4.** A clutch disengaging system for operating a friction clutch in a power train of a motor vehicle having a main disengaging system and a subsidiary disengaging system that is operable by an actuator (33) driven by an electric motor, **characterized in that** the drive voltage of the electric-motor-driven actuator (33) is proportional to a grab speed and where the grab speed results from a transmission input speed (TIS) minus the filtered transmission input speed (filtered TIS).

**Revendications**

**1.** Procédé pour supprimer des vibrations de grippage dans un système de débrayage pour un accouplement à friction dans une branche d'entraînement d'un véhicule automobile comprenant un système de débrayage principal et un système de débrayage secondaire, qui _peuvent être_ actionnés par un actionneur (33) entraîné par moteur électrique, **caractérisé en ce que** la tension d'entraînement de l'actionneur (33) entraîné par moteur électrique est proportionnelle à un régime de grippage et le régime de grippage étant obtenu à partir d'un régime d'entrée de boîte de vitesses (NGE) moins le régime d'entrée de boîte de vitesses filtré (N GE_filtré).

**2.** Procédé selon la revendication précédente, **caractérisé en ce que** le facteur de proportionnalité est augmenté en forme de rampe.

**3.** Procédé selon l'une quelconque des revendications précédentes, **caractérisé en ce que** le facteur de proportionnalité est réduit après la réduction de la vibration de glissement.

**4.** Système de débrayage pour l'actionnement d'un embrayage à friction dans une branche d'entraînement d'un véhicule automobile comprenant un système de débrayage principal et un système de débrayage secondaire, qui peut être actionné par un actionneur (33) actionné par moteur électrique, **caractérisé en ce que** la tension d'entraînement de l'actionneur (33) entraîné par moteur électrique est proportionnelle à un régime de grippage et le régime de grippage étant obtenu à partir d'un régime d'entrée de boîte de vitesse (NGE) moins le régime d'entrée de boîte de vitesse filtré (NGE_gefiltert).

Fig. 1

EP 1 496 280 B1

# Fig. 2

EP 1 496 280 B1

Fig. 3

EP 1 496 280 B1

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002063031 A1

- FR 2828916 A1